# FASCICULE DE BREVET EUROPEEN

(11) **EP 2 731 306 B1**
(45) Date de publication et mention de la délivrance du brevet: **18.09.2019**
(21) Numéro de dépôt: 13191959.9
(22) Date de dépôt: 07.11.2013
(51) Int. Cl.: H04L 27/26

(54) **Procédé et système pour la désynchronisation de canaux dans des systèmes de communication multi porteuses**
Verfahren und System zur Kanal Desynchronisierung in Mehrträgerkommunikationssystemen
Method and system for channel de-synchronization in multicarrier communication systems

(30) Priorité: 09.11.2012 FR 1203015
(43) Date de publication de la demande: 14.05.2014
(73) Titulaire: THALES, 92400 Courbevoie (FR)
(72) Inventeur: Herry, Sébastien, 94700 Maisons-Alfort (FR); Traverso, Sylvain, 92230 GENNEVILLIERS (FR); Lamy-Bergot, Catherine, 92230 GENNEVILLIERS (FR)
(74) Mandataire: Dudouit, Isabelle

(56) Documents cités:
- YANYAN ZHANG ET AL: "A Novel Timing Synchronization Method for Distributed MIMO-OFDM Systems in Multi-path Rayleigh Fading Channels", VEHICULAR TECHNOLOGY CONFERENCE, 2008. VTC SPRING 2008. IEEE, IEEE, PISCATAWAY, NJ, USA, 11 mai 2008 (2008-05-11), pages 1443-1447, XP031255804, ISBN: 978-1-4244-1644-8
- FAN HUI-LI ET AL: "A robust timing and frequency synchronization algorithm for HF MIMO OFDM systems", MOBILE CONGRESS (GMC), 2010 GLOBAL, IEEE, PISCATAWAY, NJ, USA, 18 octobre 2010 (2010-10-18), pages 1-4, XP031800629, ISBN: 978-1-4244-9001-1
- CHEN HONG ET AL: "Application Research of Technology Combining AMC and OFDM in HF Communication Systems", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23 septembre 2010 (2010-09-23), pages 1-6, XP031774492, ISBN: 978-1-4244-3708-5

## Description

L'objet de la présente invention concerne un procédé et un système pour réduire le rapport du facteur de crête dans un système de communications multi-porteuses. Le procédé est utilisé, par exemple, dans un système de communications Haute Fréquence, HF.

Dans la présente description, les mots voie ou canal sont employés indifféremment pour désigner un canal de propagation et de transmission des données.

Les liaisons notamment HF offrent une capacité hors de la ligne de vue ou BLOS qui permet de réaliser des communications à longue voire très longue distance sans nécessiter le recours à un satellite.

Le contexte technique de la présente invention se rapporte, plus particulièrement, à l'utilisation de plusieurs canaux HF (emploi dit multi-porteuses) telle que proposée dans le standard MIL STD 188-110B annexe F connu de l'Homme du métier, où est décrit l'emploi de deux porteuses de 3 KHz ou de l'usage généralisé décrit dans la demande de brevet déposée par le Demandeur sous le N° FR 10/04650 qui propose de considérer l'emploi d'une pluralité n de canaux ou voies classiques d'une largeur typique de 3 KHz de bande passante ou plus, pouvant être également des canaux tels que ceux proposés dans le standard MIL STD 110-188C annexe D, avec des bande passante de 3, 6, 9, 12, 15, 18, 21 ou 24 kHz.

La capacité de communication à longue distance (en BLOS) des liens HF repose sur la réflexion des ondes HF (qui vont typiquement de 2 à 30MHz) sur les couches de l'ionosphère, couches dont les qualités ne sont pas stables dans le temps et l'espace, ce qui conduit à de fortes variations du canal de propagation. A cette instabilité du canal vient s'ajouter également la présence toujours possible de différents brouilleurs intentionnels ou non, en particulier la nuit où la partie passante du spectre HF est moins grande.

Malgré son instabilité, ce canal présente l'intérêt de permettre des communications à longue distance sans qu'il soit nécessaire de déployer au préalable une infrastructure compliquée ou coûteuse, à la différence des communications par satellite par exemple. Considérant également sa meilleure furtivité, ceci explique pourquoi les professionnels cherchent à augmenter les débits offerts sur les liens HF. Une solution a été proposée dans la demande de brevet précitée pour considérer l'emploi d'une pluralité n de canaux de 3KHz contigus ou non, afin d'aller vers des débits utiles plus importants (au-delà de 20 kb/s) aux utilisateurs de la bande HF.

D'après le théorème de Shannon, l'augmentation de débit peut se faire, soit par augmentation de l'efficacité spectrale, soit par celle de la bande utilisée. A l'heure actuelle, les systèmes HF fonctionnant déjà à forte efficacité spectrale, le gain décisif est attendu de stratégies d'augmentation de la bande passante. Deux principales approches sont envisageables :
- un élargissement de la canalisation standard, tel que proposé dans le standard MIL STD 188-110 révision C qui prévoit l'emploi de canaux jusqu'à 24 KHz de largeur de bande,
- l'emploi d'une pluralité de canaux standards, typiquement 3 KHz, concaténés afin de constituer une largeur de bande suffisante, comme proposé dans les deux demandes de brevet du Demandeur FR 10 04560 et FR 11 03083. Cette approche est compatible de l'emploi de canaux élargis, puisque de tels canaux peuvent aussi être concaténés.

La première approche pose comme problème la disponibilité de la bande passante, et la plus faible efficacité en cas de fonctionnement sur une bande partiellement occupée.

La deuxième approche, qui permet de sélectionner des canaux de bonne qualité, pose le problème du facteur crête, c'est-à-dire de la variation de l'amplitude du signal, entre sa valeur maximale (crête) et sa valeur moyenne. On parle aussi traditionnellement de rapport entre la valeur crête et la valeur moyenne (PAPR en anglais Peak-to-Average Power Ratio) pour fonctionner correctement avec l'amplificateur de puissance.

Un problème technique posé est donc le suivant : comment limiter le facteur crête d'une forme d'onde multi-porteuses pour permettre un emploi efficace de bandes disjointes pour un même lien HF ou autre large bande et donc permettre l'emploi de formes d'ondes multi-porteuses compatibles des allocations spectrales actuelles en bande HF ou pour d'autres fréquences.

L'état de l'art sur la problématique de la réduction du facteur crête, connu du Demandeur, propose différentes techniques citées ci-après.

Une première technique est l'emploi de solutions mono-porteuses ayant un facteur de recul inférieur à des solutions multi-porteuses. Ces solutions à base de mono-porteuses se révèlent complexes à égaliser en cas de bande passante importante. Typiquement, il est à l'heure actuelle difficile de réaliser un égaliseur sur canal HF ionosphérique avec de bonnes performances au-delà d'une largeur de bande utile de 12 KHz. Elles posent aussi le problème de la disponibilité de la bande passante en question, l'emploi d'une monoporteuse nécessitant d'avoir une allocation contiguë, alors qu'en cas de multi-porteuses, il est possible d'envisager l'utilisation d'un ensemble de sous-bandes non contigües comme il est décrit dans la demande de brevet FR 10 04560 précitée.

Une autre technique est l'emploi de modulations à faible facteur de crêtes, type modulation à phase continue ou CPM (continuous phase modulation). Ces solutions posent le problème de leur largeur spectrale importante, fortes épaules, et donc de leur non-conformité aux gabarits radio standards, sauf à demander des occupations spectrales très importantes, qui ne sont pas envisagées actuellement en HF.

Une autre technique est l'emploi de solutions d'écrêtage connu sous le terme anglo-saxon « clipping ». Le principal défaut de ces techniques est qu'elles dégradent le signal. Le signal ayant été dégradé par les opérations d'écrêtage et de filtrage, les performances sont naturellement dégradées, cette dégradation étant en général corrigée par le codage correcteur ajusté en fonction avec un coût en terme de débit utile transmis.

L'emploi de solutions par codage permet de réduire efficacement la dynamique en puissance du signal. Cependant, l'inconvénient majeur de ces solutions est la diminution de l'efficacité spectrale induite naturellement par les techniques de codage.

Les solutions par ajout de signal sont efficaces pour réduire la dynamique en puissance du signal. De nombreuses solutions existent dans ce domaine, leur principal défaut est qu'elles dégradent le rendement énergétique de l'émetteur car le signal ajouté ne transporte aucune information utile.

Une autre technique est l'emploi de solution par extension de constellation. Ces solutions modifient par définition la constellation à transmettre, modifiant ainsi la distance euclidienne entre les points de la constellation de référence. Par conséquent, les performances sont naturellement dégradées.

D'autres solutions plus basiques telles que la réduction de la puissance d'amplification ou le travail avec des modulations à plus faible facteur de crête comme la modulation par déplacement de phase en abrégé PSK (phase shift keying) au lieu de la modulation d'amplitude en quadrature ou QAM (quadrature amplitude modulation) impliquent une forte réduction du débit utile pouvant être offert et ne sont donc pas retenues.

Le document de Yanyan Zhang et al, intitulé « A Novel Timing Synchronization Method for Distributed MIMO-OFDM Systems in Multi-path Rayleigh Fading Channels », publié le 11 mai 2008, pages 1443-1447, XP031255804 concerne l'amélioration de la synchronisation en ajoutant une séquence dont les propriétés de corrélation sont connues et qu'il ne soulève pas le problème technique de la réduction de facteur de crête.

Les solutions de l'art antérieur ne permettent donc pas de réaliser une réduction du facteur de crête sans dégradation du signal, l'utilisation d'une bande passante plus importante ou la modification du signal émis.

Le procédé selon l'invention repose notamment sur l'introduction d'un décalage, notamment sous la forme de symboles de désynchronisation, entre les différents canaux de la forme d'onde multi-porteuse, afin d'éviter que les canaux ne se retrouvent en phase notamment pour les symboles pilotes et ainsi ne conduisent à un facteur de crête trop important.

L'invention concerne un procédé pour réduire le facteur de crête dans un système de communication multiporteuses, les données étant transmises sur m canaux caractérisé en ce qu'il comporte au moins les étapes suivantes : au niveau de l'émission de données se présentant sous la forme d'une trame comprenant un préambule de synchronisation, introduire un nombre d de symboles de désynchronisation en début de chacune des trames, lesdits symboles de désynchronisation étant adaptés à introduire un décalage entre les différents canaux d'une forme d'onde multi porteuse, le nombre d étant choisi en fonction du numéro m de canal de transmission chₘ concerné, le nombre d de symboles de désynchronisation introduits étant différents pour les m canaux .

Selon une variante de réalisation, on introduit un nombre d de symboles de désynchronisation égal à 0 avant le préambule initial de synchronisation de la trame transmise sur le premier canal et un nombre d de symboles de désynchronisation égal à m-1 sur le canal chm.

Le procédé introduit des symboles aléatoires avec un nombre d différent pour chaque canal

Le procédé peut comporter au niveau de l'étape de réception une étape de recalage d'un canal en tenant compte du nombre d de symboles introduits dans une trame.

Selon un mode de réalisation, le procédé comporte une étape commune de codage et d'entrelacement des données sur les m canaux.

Les communications mises en oeuvre sont des ondes HF de 2 à 30 MHz.

L'invention concerne aussi un système pour réduire le facteur de crête dans un système de communication multiporteuses, comportant une chaîne d'émission de données et une chaîne de réception, le système comportant m canaux de transmission de données sous forme de trames caractérisé en ce qu'il comporte au niveau de la chaîne d'émission au moins un module de mise en trame des données adapté à insérer un nombre d de symboles de désynchronisation en début de chaque trame de données, lesdits symboles de désynchronisation étant adaptés à introduire un décalage entre les différents canaux d'une forme d'onde multi porteuse, le nombre d étant choisi en fonction du numéro de canal chₙ concerné, le nombre d de symboles de désynchronisation introduits étant différents pour les m canaux.

Le système peut comporter au niveau de la chaîne de réception un module adapté à recaler chaque canal en utilisant le nombre de symboles introduit dans une trame.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- la figure 1, un exemple de structure de trame pour la mise en oeuvre du procédé selon l'invention,
- la figure 2, un exemple d'architecture d'un système pour l'émission et la réception, sur la base de l'architecture d'une solution selon la demande de brevet déposée par le Demandeur sous le N° FR 11/03083,
- la figure 3, une variante de la figure 2, présentant la proposition dans un contexte plus générique.

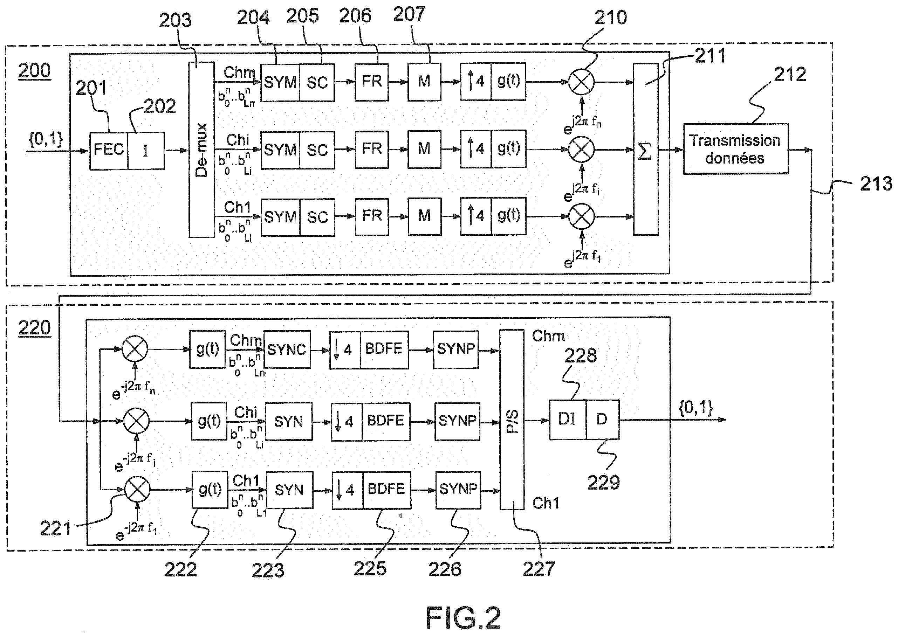

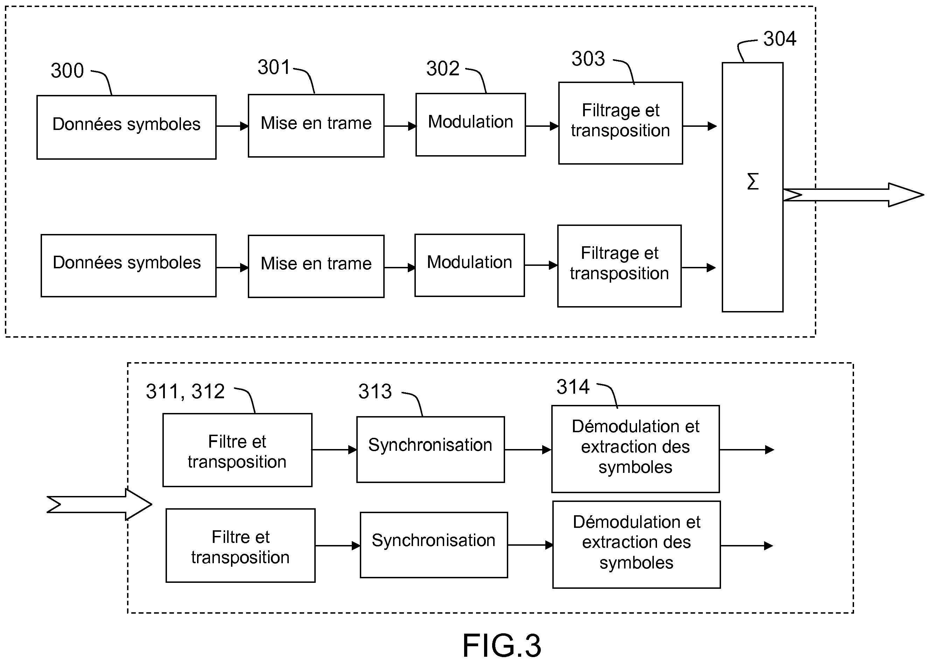

Dans la description des figures qui va suivre, différentes abréviations sont utilisées. Au niveau de la chaîne d'émission dans les figures 2 et 3, les références utilisées signifient : FEC : le code correcteur d'erreur, l : l'entrelacement, SYM : la formation de symboles, FR : l'étape de mise en trame, M : l'étape de modulation ; l'étape SC pour scrambling. Les références utilisées au niveau de la chaîne de réception dans les figures 2 et 3 sont : g(t) le filtrage, SYN : la synchronisation, BDFE : l'étape d'égalisation des trames, SYNP : la prédiction de la synchronisation, Dl : le désentrelacement, D : le décodage des données.

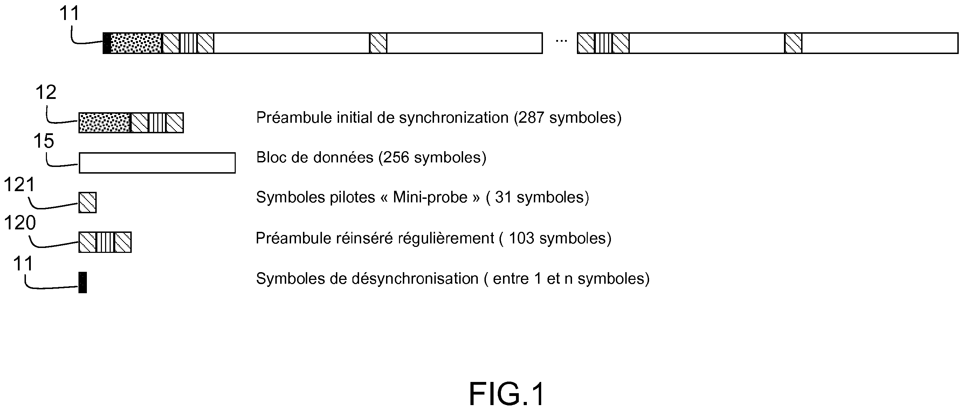

La figure 1 schématise un exemple de structure de trame dans laquelle des symboles supplémentaires ont été introduits, de manière aléatoire, par exemple, le nombre des symboles étant différent pour chaque canal radio utilisé dans le système de communication ou au moins pour la majorité des canaux. Les symboles supplémentaires sont désignés comme des symboles de désynchronisation ayant notamment pour fonction d'introduire un décalage entre les différents canaux d'une forme d'onde multiporteuse. Les symboles de synchronisation sont choisis par exemple dans la même constellation que les symboles utilisés pour la synchronisation.

L'exemple de la figure 1, qui présente un format classique de trame selon STANAG 4539 ou la MIL STD 188-110C représente une trame dans laquelle on a ajouté un bloc de symboles de désynchronisation. Chaque canal se soit attribuer un nombre de symboles de désynchronisation différent, par exemple compris entre un et n, où n est le nombre maximal de porteuses considérées. A titre d'exemple, l'introduction d'un symbole de désynchronisation supplémentaire sur un canal m par rapport au précédent m-1 revient à décaler chaque canal m par rapport au précédent canal m-1.

La trame est constituée d'un premier bloc de symboles 11 de désynchronisation, suivi d'un préambule initial 12 de synchronisation, composé d'un préambule 120 réinséré régulièrement, par exemple 103 symboles, comprenant un bloc de symboles pilotes 121 que l'on va retrouver réparti dans la trame, et d'un bloc de données 15. Le ou les symboles de désynchronisation 11 sont en pratique introduits avant le préambule initial de synchronisation 12 de façon à ce que les préambules (identiques) sur les différents canaux soient désynchronisés. Notamment, l'introduction de symboles de désynchronisation va éviter que les symboles pilotes ne se retrouvent en phase et ne conduisent à un facteur de crête trop important.

Le décalage induit au niveau de l'émission de la trame de données est rattrapé du côté émetteur, par exemple en recalant chaque canal, ou par action de l'égaliseur du récepteur qui traite ce décalage comme l'impact d'un multi-trajet. L'objet de l'introduction des symboles de désynchronisation étant de décaler les séquences communes aux différents canaux, il est d'intérêt, en terme d'efficacité, que les symboles de désynchronisation introduits ne soient pas simplement une recopie d'un même et unique symbole. Il est en pratique recommandé d'introduire des symboles aléatoires (avec un tirage par exemple fonction du numéro du canal considéré) appartenant à la constellation utilisée pour le bloc de préambule 12. Une autre possibilité est de prédéfinir des séquences de désynchronisation dont on aura vérifié les propriétés au préalable.

Les symboles de données étant, par essence, des symboles vairant d'un canal à l'autre, l'introduction de la désynchronisation proposée ici n'aura pas d'impact spécifique sur la partie données, même dans le cas oùles canaux seraient modulés avec des modulations différentes.

Le nombre de symboles de désynchronisation est différent sur chacun des canaux. Le nombre de symboles ajouté est choisi afin de ne pas introduire inutilement du délai, ni à terme de dépasser les capacités de l'égaliseur du système.

La manière de choisir le nombre de symboles de données introduit peut être une variation linéaire, par exemple; {au canal 1, on associe 1 symbole de désynchronisation}, {au canal 2, 2 symboles de désynchronisation},.... {au canal m, on associe m symboles de désynchronisation}. Il peut aussi en être autrement.

Les symboles peuvent être des symboles supplémentaires aléatoires en nombre différent pour chaque canal radio. En pratique, un symbole par canal est suffisant, à titre d'exemple, un choix d'un nombre entier de symboles ou d'un décalage par fraction de symbole peut être envisagé sans sortir du cadre de l'invention.

La figure 2 schématise un exemple de système de communication selon l'invention dans lequel les fonctions de codage et d'entrelacement sont partagées entre m canaux. Au niveau de l'émetteur, le système selon l'invention comprend un module de mise en trame adapté à ajouter les symboles de désynchronisation ayant pour fonction d'introduire un décalage entre les différents canaux de la forme d'onde multiporteuse, en plus des symboles pilotes et de synchronisation.

Au niveau de la partie émetteur 200, les données binaires {0, 1} de l'utilisateur passent en premier dans un module de correction 201 FEC, puis dans un entrelaceur 202 avant d'être démultiplexées 203. Les données démultiplexées bᵢ^{j} sont ensuite transmises sur m canaux chi en parallèle. Les m canaux ou m voies ch₁...chₘ sont, par exemple, des canaux de largeur de 3KHz pouvant être contigus ou non.

Les données sont mises en forme à travers un module de formation de symbole 204 et d'une étape d'embrouillage 205. Le module suivant de mise en trame 206 est adapté pour insérer un nombre n de symboles de désynchronisation choisi selon l'application. Le module de mise en trame ajoute les symboles de désynchronisation, en plus des symboles pilotes et d'autobaud.

Par exemple, on pourra choisir d'ajouter à chaque canal chi, avant le préambule initial de synchronisation, un nombre d de symboles de désynchronisation égal au numéro i du canal dans le système. La trame de données ainsi construite est transmise à des moyens de modulation 207, de suréchantillonage 208 et de filtrage 209. Les étapes suivantes consistent à les transposer en fréquence 210, la fréquence de transposition Tfm étant associée à un canal chₘ, puis les données transposées vont être sommées 211. Le signal résultant de cette somme va être transmis via le canal de transmission 212 et une liaison adaptée 213 vers la partie récepteur 220.

Selon une autre variante, il est possible d'introduire zéro symbole avant le préambule initial de synchronisation de la trammes transmise sur le premier canal et un nombre d de symboles de désynchronisation égal à m-1 sur le canal chₘ.

Au niveau de la partie récepteur 220, le signal reçu après propagation dans le canal de transmission est, dans un premier temps, transposé T'fi en fréquence dans un module 221 ce qui permet une séparation des données sur les m canaux chₘ, puis les données transposées en fréquence sont filtrées via un module adapté 222, puis sont transmises à un module 223 de synchronisation avant d'être sous-échantillonées 224 et égalisées, 225. Les données sont transmises à un module de correction de la prédiction de synchronisation 226 et réassemblées au niveau d'un tampon parallèle série 227. Les données réassemblées sont transmises à un désentrelaceur 228 symétrique de l'entrelaceur 202 de la partie émetteur 200. Après désentrelacement les données sont transmises à un module de décodage correcteur 229 qui fournit des données binaires.

Plusieurs réalisations des modules de synchronisation 223 et de correction de synchronsiation 226 sont envisageables. Une première solution consiste à réaliser une synchronisation indépendante sur chacun des canaux, et dans ce cas, les symboles de désynchronisation sont ignorés par le récepteur qui s'accrochera sur le préambule. Chaque canal fonctionnera alors comme il le fait nominalement en l'absence de symboles de désynchronisation. Une seconde solution, moins complexe en ressources, est de prendre la synchronisation sur l'un des canaux, par exemple le premier ou celui du milieu, et à fournir l'information de synchronisation sur les autres. Les autres canaux vont alors compenser cette désynchronisation soit grâce à leur connaissance du nombre de symboles de désynchronisation qui ont été ajoutés à l'émission (connaissance implicite liée au fait que le système TX/RX emloie la technique de désynchronisation, par exemple avec un décalage de p symboles pour le canal p), soit en utilisant la capacité de l'égaliseur et du module de correction de synchronisation pour compenser ce retard, qui pourra être vu comme un retard lié au canal de propagation .

En utilisant une forme d'onde telle que décrite dans la demande de brevet FR 11 03083 du Demandeur, les résultats de mesure des coefficients d'atténuation dans le cas synchronisé et le cas désynchronisé sont donnés dans la table 1 à titre illustratif. La table donne l'estimation des facteurs de recul pour les différentes configurations de m=1 à 16 canaux en approche multi-ST4539. Ces valeurs ont été obtenues sur une simulation de référence réglée pour un écrêtage maximal de probabilité 10⁻⁶.

| **Nombre de canaux** | **Gain mesuré en terme de facteur de recul (dB)** | **Facteur de recul cas désynchronisé par rapport au mode mono-canal (dB)** |
|---|---|---|
| 1 | 0,00 | 0,00 |
| 2 | 0,16 | 2,51 |
| 3 | 0,92 | 3,52 |
| 4 | 0,87 | 4,84 |
| 5 | 1,10 | 5,48 |
| 6 | 1,67 | 5,79 |
| 7 | 1,68 | 6,46 |
| 8 | 2,01 | 6,71 |
| 9 | 2,16 | 7,08 |
| 10 | 2,23 | 7,48 |
| 11 | 2,56 | 7,56 |
| 12 | 2,57 | 7,93 |
| 13 | 2,66 | 8,19 |
| 14 | 2,80 | 8,29 |
| 15 | 3,02 | 8,45 |
| 16 | 3,26 | 8,50 |

La figure 3 schématise un exemple de système de communication multicanaux plus général, dans lequel les opérations de codage et d'entrelacement comme décrits à la figure 2 ne sont pas nécessairement partagés. Ce système multicanal est un système dont les canaux chₘ emploient la même forme d'onde, ou du moins des séquences de référence identiques et positionnées pour émission aux mêmes instants. Ce système connaît donc la même problématique d'augmentation du rapport PAPR mentionné ci-avant.

Sur la figure 3 le système comprend m canaux ou voies ch₁...chₘ permettant la transmission de données bᵢ^{j} issues d'un ou plusieurs émetteurs. Les données symboles arrivent sur chaque canal préalablement codées, entrelacées et « scramblées » si nécessaire.Les étapes permettant l'insertion des symboles de désynchronisation au niveau de chacun des canaux, sont réalisées au niveau du module de mise en trame.

Au niveau de la partie émetteur 300 du système, les données symboles sont transmises à un module 301 de mise en trame. Le module de mise en trame est adapté à insérer un bloc de symboles, ou un nombre n de symboles choisi en fonction du canal, par exemple. L'ensemble des données symboles comprenant les symboles de désynchronisation est ensuite transmis à un module de modulation 302, puis les données modulées sont envoyées à un module de filtre et de transposition en fréquence 303. Les données provenant des différents canaux sont sommés, module 304, avant d'être transmise via un canal de propagation 305.

Au niveau de la partie récepteur 310 du système, les données du signal reçu vont être transposées 311 en fréquence, ce qui permet une séparation des données sur les m canaux chₘ, filtrés au sein d'un module 311, puis les données transposées en fréquence sont filtrées via un module adapté 312, puis sont transmises à un module 313 de synchronisation avant d'être démodulées 314. Les symboles sont ensuite extraits grâce à un module adapté.

Le procédé et le système selon l'invention s'appliquent notamment pour des liaisons de type point à point ou point à multi-points.

Le procédé et le système selon l'invention permettent notamment de réduire de 1 à 3 dB le facteur crête sans modification destructive du signal, et peut même être combinée à terme avec d'autres techniques de réduction du PAPR comme un écrêtage.

L'invention s'applique au niveau de la couche physique à l'émission et ne nécessite pas obligatoirement d'adaptation en réception. En effet dans certains cas elle est assimilable à un retard lié à un retard sur le canal de propagation. Le système et le procédé selon l'invention sont mis en oeuvre sans modifier le standard et donc sans rupture de l'interopérabilité avec des équipements non modifiés selon le procédé.

## Revendications

1. Procédé pour réduire le facteur de crête dans un système de communication multiporteuses, les données étant transmises sur m canaux **caractérisé en ce qu'**il comporte au moins les étapes suivantes : au niveau de l'émission de données se présentant sous la forme d'une trame comprenant un préambule de synchronisation (12), introduire un nombre d de symboles de désynchronisation (11) en début de chacune des trames, lesdits symboles de désynchronisation étant adaptés à introduire un décalage entre les différents canaux d'une forme d'onde multi porteuse, le nombre d étant choisi en fonction du numéro m de canal de transmission (chₘ) concerné, le nombre d de symboles de désynchronisation introduits étant différents pour les m canaux .

2. Procédé selon la revendication 1 **caractérisé en ce que** l'on introduit un nombre d de symboles de désynchronisation égal à 0 avant le préambule initial de synchronisation de la trame transmise sur le premier canal et un nombre d de symboles de désynchronisation égal à m-1 sur le canal (chₘ).

3. Procédé selon la revendication 1 **caractérisé en ce que** l'on introduit des symboles aléatoires avec un nombre d différent pour chaque canal

4. Procédé selon l'une des revendications 1 à 3 **caractérisé en ce qu'**il comporte au niveau de l'étape de réception une étape de recalage d'un canal en tenant compte du nombre d de symboles introduits dans une trame.

5. Procédé selon l'une des revendications 1 à 3 **caractérisé en ce qu'**il comporte une étape commune de codage et d'entrelacement des données sur les m canaux.

6. Procédé selon l'une des revendications précédentes **caractérisé en ce que** les communications sont des ondes HF de 2 à 30 MHz.

7. Système pour réduire le facteur de crête dans un système de communication multiporteuses, comportant une chaîne d'émission de données et une chaîne de réception, le système comportant m canaux de transmission de données sous forme de trames, **caractérisé en ce qu'**il comporte au niveau de la chaîne d'émission au moins un module (226, 301) de mise en trame des données adapté à insérer un nombre d de symboles de désynchronisation en début de chaque trame de données, lesdits symboles de désynchronisation étant adaptés à introduire un décalage entre les différents canaux d'une forme d'onde multi porteuse, le nombre d étant choisi en fonction du numéro m de canal de transmission (chₙ) concerné, le nombre d de symboles de désynchronisation introduits étant différents pour les m canaux .

8. Système selon la revendication 7 **caractérisé en ce qu'**il comporte au niveau de la chaîne de réception un module adapté à recaler chaque canal en utilisant le nombre de symboles introduit dans une trame.

## Patentansprüche

1. Verfahren zum Reduzieren des Spitzenfaktors in einem Mehrträger-Kommunikationssystem, wobei die Daten auf m Kanälen übertragen werden, **dadurch gekennzeichnet, dass** es wenigstens die folgenden Schritte beinhaltet: Einführen, beim Senden von Daten in Form eines Frames, der eine Synchronisationspräambel (12) umfasst, einer Anzahl d von Desynchronisationssymbolen (11) am Anfang jedes der Frames, wobei die Desynchronisationssymbole so ausgelegt sind, dass ein Versatz zwischen die unterschiedlichen Kanälen einer Mehrträgerwellenform eingeführt wird, wobei die Anzahl d in Abhängigkeit von der Anzahl m des betroffenen Übertragungskanals (chₘ) gewählt wird, wobei die Anzahl d von eingeführten Desynchronisationssymbolen für die m Kanäle unterschiedlich ist.

2. Verfahren nach Anspruch 1, **dadurch gekennzeichnet, dass** eine Anzahl d von Desynchronisationssymbolen gleich 0 vor der anfänglichen Synchronisationspräambel des auf dem ersten Kanal übertragenen Frames und eine Anzahl d von Desynchronisationssymbolen gleich m-1 auf dem Kanal (chₘ) eingeführt wird.

3. Verfahren nach Anspruch 1, **dadurch gekennzeichnet, dass** zufällige Symbole mit einer Anzahl d eingeführt werden, die für jeden Kanal unterschiedlich ist.

4. Verfahren nach einem der Ansprüche 1 bis 3, **dadurch gekennzeichnet, dass** er im Empfangsschritt einen Schritt des Neueinstellens eines Kanals unter Berücksichtigung der Anzahl d von in einen Frame eingeführten Symbolen beinhaltet.

5. Verfahren nach einem der Ansprüche 1 bis 3, **dadurch gekennzeichnet, dass** es einen gemeinsamen Codierungs- und Verschachtelungsschritt von Daten auf den m Kanalen beinhaltet.

6. Verfahren nach einem der vorherigen Ansprüche, **dadurch gekennzeichnet, dass** die Kommunikationen HF-Wellen von 2 bis 30 MHz sind.

7. System zum Reduzieren des Spitzenfaktors in einem Mehrträger-Kommunikationssystem, umfassend eine Datensendekette und eine Empfangskette, wobei das System m Datenübertragungskanäle in Form von Frames umfasst, **dadurch gekennzeichnet, dass** es an der Empfangskette wenigstens ein Daten-Framing-Modul (226, 301) umfasst, ausgelegt zum Einfügen einer Anzahl d von Desynchronisationssymbolen am Anfang jedes Daten-Frames, wobei die Desynchronisationssymbole so ausgelegt sind, dass sie einen Versatz zwischen den verschiedenen Kanälen mit einer Mehrträgerwellenform einführen, wobei die Anzahl d in Abhängigkeit von der Anzahl m des betroffenen Übertragungskanals (chₙ) ausgewählt ist, wobei die Anzahl d von eingeführten Desynchronisationssymbolen für die m Kanäle unterschiedlich ist.

8. System nach Anspruch 7, **dadurch gekennzeichnet, dass** es an der Empfangskette ein Modul umfasst, ausgelegt zum Neueinstellen jedes Kanals unter Nutzung der Anzahl von in einen Frame eingeführten Symbolen.

## Claims

1. Method for reducing the peak factor in a multi-carrier communication system, the data being transmitted on m channels, **characterised in that** it comprises at least the following steps: in the emission of data in the form of a frame comprising a synchronization preamble (12), introducing a number d of desynchronization symbols (11) at the start of each of the frames, said desynchronization symbols being adapted to introduce an offset between the different channels of a multi-carrier wave form, the number d being chosen as a function of the concerned transmission channel number m (chₘ), the number d of desynchronization symbols introduced being different for the m channels.

2. Method according to claim 1, **characterised in that** a number d of desynchronization symbols equal to 0 are introduced before the initial synchronization preamble of the frame transmitted on the first channel and a number d of desynchronization symbols equal to m-1 are introduced on the channel (chₘ).

3. Method according to claim 1, **characterised in that** random symbols are introduced with a different number d for each channel.

4. Method according to any one of claims 1 to 3, **characterised in that** in includes, in the reception step, a step of realigning a channel by taking into account the number d of symbols introduced into a frame.

5. Method according to any one of claims 1 to 3, **characterised in that** it comprises a common step of coding and interleaving of the data on the m channels.

6. Method according to any one of the previous claims, **characterised in that** the communications are HF waves of 2 to 30 MHz.

7. System for reducing the peak factor in a multi-carrier communication system, comprising a data emission chain and a reception chain, the system comprising m channels for transmitting data in the form of frames, **characterised in that** it comprises, in the emission chain, at least one module (226, 301) for framing the data adapted to insert a number d of desynchronization symbols at the start of each data frame, said desynchronization symbols being adapted to introduce an offset between the different channels of a multi-carrier wave form, the number d being chosen as a function of the transmission channel number m (chₙ) concerned, the number d of the desynchronization symbols introduced being different for the m channels.

8. System according to claim 7, **characterised in that** it comprises, in the reception chain, a module adapted to realign each channel by using the number of symbols introduced into a frame.
